# EUROPEAN PATENT APPLICATION

(11) **EP 3 266 510 A1**
(43) Date of publication of application: **10.01.2018**
(21) Application number: 16001482.5
(22) Date of filing: 05.07.2016
(51) Int. Cl.: B01D 53/04

(54) **PROCESS ENGINEERING ARRANGEMENT AND METHOD FOR OPERATING A PROCESS ENGINEERING ARRANGEMENT**

(71) Applicant: Linde Aktiengesellschaft, 80331 München (DE)
(72) Inventor: Halde, Benjamin, 80336 München (DE)

(57) **Abstract**

A process engineering arrangement comprises a temperature swing adsorption apparatus (1) with at least one adsorber device (10), which is configured to adsorb at least one component of a process gas (G11), in an adsorption mode, and to release the at least one adsorbed component into a purge gas (G12) at a regeneration temperature, in a regeneration mode; a heating device (11), configured to heat the purge gas (G12) to at least the regeneration temperature; and a solar energy device (12) being configured to feed energy to the heating device (11) for operating the heating device (11).

## Description

The invention relates to a process engineering arrangement with a temperature swing adsorption apparatus and a method for operating a process engineering arrangement with a temperature swing adsorption apparatus.

Natural gas sources often contain components which cannot be used in a process or which are even harmful to some of the equipment of a process engineering plant. In such cases, a feed gas stream obtained from such natural gas sources must be cleaned in order to remove the unwanted components from the feed gas stream.

One way to do this, is to employ temperature swing adsorption systems. Temperature swing adsorption systems are adsorber systems, which can adsorb specific components from a feed gas stream, until their saturation capacity is reached. Then, the adsorbers are regenerated, which can be done by purging them with a purge gas stream at an elevated temperature. The temperature, at which desorption of the adsorbed components, and thus regeneration of the adsorber, occurs, depends on the specifics of the system.

Heating the purge gas stream to the predefined regeneration temperature needs a significant amount of energy, which reduces the overall energy efficiency of such process engineering plants.

It is an object of this invention to improve the energy efficiency of process engineering plants.

According to a first aspect of the invention, a process engineering arrangement is suggested, which comprises a temperature swing adsorption apparatus with at least one adsorber device. The adsorber device is configured to adsorb at least one component of a process gas, in an adsorption mode, and to release the at least one adsorbed component into a purge gas at a regeneration temperature, in a regeneration mode. The process engineering arrangement further comprises a heating device, which is configured to heat the purge gas to at least the regeneration temperature, and a solar energy device, which is configured to feed energy to the heating device for operating the heating device.

This arrangement advantageously employs solar energy for heating the purge gas to the regeneration temperature. Thus, it is possible to save energy resources with this arrangement. It can also help to reduce the emission of greenhouse gases.

An adsorber device can be a vessel which is filled with an adsorbent. Adsorbents are materials with a large specific surface area, such as silica gel, zeolites or activated carbon. The adsorbent may be provided as granulate. The vessel may have any predefined or advantageous shape, such as cylindrical, spherical, rectangular shaped or irregular. Further, it may consist of any suitable material such as stainless steel, a composite material and/or a coated material.

The vessel has an inlet and an outlet. A gas stream that is directed to the inlet flows through the interior of the vessel, which is filled with the adsorbent, towards the outlet, from where it can be directed to further equipment. Flowing through the interior of the vessel implies that the gas stream is in contact with the adsorbent, such that adsorption and desorption processes can take place. This means in particular, that an initial component in a gas stream may be removed after having passed the adsorber device. Said component is then adsorbed by the adsorbent. In a different operating mode the gas may be enriched with a component after passing the adsorber device, when said component desorbs from the adsorbent. Whether a component is adsorbed or desorbed depends on the specific system and thermodynamics. In particular, the temperature and/or the pressure of the gas stream play a role in this respect.

In particular, the adsorber device can be operated in the regeneration mode. Thus, the adsorber device is regenerated by conducting a gas stream at the regeneration temperature through the adsorber device. The adsorber is purged. After the regeneration mode, the adsorber device can be used again to clean a process gas. The duration of the regeneration mode depends on the adsorbed mass of the adsorbate and the amount that can be removed per time unit.

A gas stream may also be referred to as a gas flow and can be defined by a mass and/or volume flow per time unit. A unit for the mass flow may be the weight per time unit, e.g. kg/h, the number of particles per time unit, e.g. mol/h, or the volume per time unit, e.g. Nm³/h (norm-cubic meter per hour). When the flow is given as a volume per time unit, the pressure and the temperature of the gas must be known. When Nm³/h is used, these two variables have the values according to standard conditions, which are defined in DIN1343, for example, pressure pn = 1013.25 hPa, temperature Tn = 0°C.

A process gas may be any gas mixture which comprises a component that is to be removed from the gas mixture in order to process the gas further. The terms gas and gas mixture may be used synonymously in this description. A component is not necessarily a pure element which is in a gaseous state. Also larger molecules like water or hydrocarbons and the like can be referred to as a component. Solid dust particles or droplets of a liquid may be carried by the gas stream and thus be considered a component of the gas mixture. For example, the process gas may be gas from a natural gas field that contains hydrogen, carbon monoxide, nitrogen, methane and/or further hydrocarbon compounds, noble gases, oxygen, helium, water and/or other substances.

A purge gas may be any gas mixture which is capable of taking up the adsorbed component when it comes into contact with adsorbent. The adsorption and desorption process depend on the thermodynamic variables temperature and/or pressure. Physically, the partial pressure of the considered component in the purge gas must be smaller than the vapor pressure of the adsorbate. For example, the purge gas may predominantly contain hydrogen, a major fraction of Carbon monoxide, and minor fractions of other components like nitrogen, methanol, and others.

In this description, the terms process gas and/or purge gas refer to the gas with its components or the gas stream having a mass flow, pressure and temperature.

Both, the process gas and the purge gas may arise from individual upstream processes and/or upstream devices. These may be any processes such as a column, a pressure swing adsorption apparatus, compressor device, a cooling device, a storage device, or the like. Irrespective of the nature of the process, this is an upstream process throughout this description. The process gas and the purge gas can be passed to individual downstream processes after they were employed in the process engineering arrangement described herein. Further downstream processes may be any of the aforementioned processes or devices.

The heating device may be implemented as an electrical heater, a fuel heater, a heat exchanger, a countercurrent heat exchanger, or the like. The heating device is configured to heat the purge gas to at least the regeneration temperature. The purge gas may be referred to as a cold purge gas or simply purge gas upstream of the heating device. The purge gas may be called heated purge gas downstream of the heating device. Downstream means that the purge gas has passed through the heating device, where it was heated to at least the regeneration temperature. The regeneration temperature is set by the individual adsorption process for which the temperature swing adsorption apparatus is employed. The heating device may be configured to heat the purge gas to a temperature above the regeneration temperature. This can be advantageous at the beginning of the regeneration mode in the adsorber device. The adsorber device itself has a low temperature at first, and must be heated to the regeneration temperature.

The solar energy device may be any device that is capable of providing energy when it is irradiated with light, in particular with sunlight. For example, it may be implemented as a photovoltaic system and can comprise electric solar cells, compound semiconductor solar cells, multi-junction solar cells, or the like, which provide electrical energy that may be used to operate an electrical heating device. It may also be implemented to obtain a chemical fuel e.g. by electrolysis of water. Further, it can be implemented as a solar thermal device, which is employed to heat up a fluid or a solid directly. The heated fluid can then be used to transport the heat to the heating device, where the heat is transferred to the purge gas.

According to an embodiment of the process engineering arrangement, the solar energy device is configured to collect and direct sunlight to the heating device for directly heating the purge gas.

This embodiment has the advantage that no intermediate device to transport the energy from the solar energy device to the heating device is necessary, thus reducing both the cost and the complexity of the process engineering arrangement.

Direct heating of the purge gas refers to heating without a mediating entity such as a fluid in a secondary circulation. However, since most gases are only weakly absorbing sunlight, a light absorber can be employed for an efficient operation of the heating device. For example, the absorber is a solid object having a high absorbance over the whole spectrum of the sunlight. The absorbed sunlight then heats up the absorber. The purge gas is directed to the absorber, where it comes into contact with the hot surface of the absorber, and thus heat is transferred from the light absorber to the purge gas.

According to a further embodiment of the process engineering arrangement, the solar energy device comprises a light concentrating device for collecting and concentrating sunlight in a focal area in the heating device, along with a piping system for directing the purge gas to the focal area. In the focal area, the purge gas is heated to at least the regeneration temperature. The piping system is further implemented to direct the purge gas at the regeneration temperature from the focal area to the adsorber device.

This embodiment has the advantage that heating of the purge gas can be realized using only limited means. Hence, the arrangement is easy to construct, not complex, and has low maintenance costs, since all components use standard means.

The light concentrating device is preferably configured to direct sunlight towards a focal area. E.g., the light concentrating device has a large surface area, which serves as a light collecting area. The sunlight incident on the light collecting area is directed towards the focal area, where it is concentrated. Then term "concentrated" means that the energy density due to the concentrated sunlight is larger than the energy density of the incident sunlight. The focal area may comprise one or several focal points, a focal line and/or an area of any shape, depending on the geometry of the light concentrating device. For example, a spherical lens may produce a focal point with small lateral dimensions, and a cylindrical lens may produce a focal line.

The light concentrating device can include a plurality of segments and does not need to be formed as a single segment or formed in one piece. For example, the light concentrating device may comprise many small mirrors, which can be arranged and/or adapted individually.

The focal area is preferably arranged in the heating device, because then the energy of the concentrated sunlight can be directly converted to heat energy and can be used to heat the purge gas. Further, a piping system may be used to direct the purge gas stream first to the heating device and the focal area in the heating device, and then to the adsorber device.

The piping system may comprise any kind of pipes, tubes, ducts, or the like, which are suitable to direct the purge gas stream. The piping may include connector elements and/or valves. In particular, the piping system may comprise a pipe made of a heat conducting material, such as a metal, that has a high absorbance for sunlight on its surface and that resists stress due to large temperature variations. Such a pipe may be referred to as a heating section or heating pipe segment. The heating section may comprise a single material or a compound of several materials, and it may be coated with paint or another coating to provide reliable absorbance for sunlight. The heating section is preferably arranged in the focal area of the light concentrating device in the heating device. Advantageously, the focal area and the heating pipe segment have similar shapes, such that sunlight directed to the focal area, is incident on the heating pipe segment and is absorbed by the heating pipe segment.

The piping system downstream of the heating device is configured to direct the heated purge gas stream to the adsorber device. The purge gas stream is at least at the regeneration temperature, which is an elevated temperature compared with usual ambient temperatures, e.g. between 300°C and 600°C. In order to maintain the temperature, the piping system downstream of the heating device may comprise heat insulation means such as insulation wool.

According to a further embodiment of the process engineering arrangement, a section of piping system in the focal area in the heating device is enclosed in a sealed container.

This can be advantageous in rough environments, because the heating section is then protected from environmental influences. Further, the sealed container may be filled with an inert gas or a gas mixture.

For example, many materials oxidize at elevated temperatures at the presence of water. By employing a sealed container, the presence of water in the proximity of the heating section can be avoided, thus increasing the lifetime of the system.

According to a further embodiment of the process engineering arrangement, the light concentrating device comprises reflective parabolic troughs, reflective or refractive Fresnel optical elements, or a combination thereof.

Reflective optical elements are preferred because they are easy to produce from many materials, because they do not need to be transparent, as is the case for refractive optical elements. The reflective material may be any suitable material that provides sufficient strength and can be formed into a suitable shape. Further, the material may have a reflective surface or may be coated with reflective paint or coating. For example, a parabolic trough formed from a stainless steel sheet that is coated with a layer of silver, which provides a high reflectivity, and is further coated with a protective coating to protect the sensitive silver layer may be employed. A parabolic trough will produce a focal area in the form of a focal line, when irradiated from a suitable angle.

In other cases refractive optical elements may be preferred. For example, the heated pipe segments can be arranged in a sealed container which is filled with an inert gas or another preferred gas mixture. Then, refractive optical elements can be used as a part of the container.

According to a further embodiment of the process engineering arrangement, the solar energy device comprises a further light concentrating device for collecting and concentrating sunlight in a further focal area in the heating device, and the piping system is configured to direct a portion of the purge gas to the further focal area and to direct the portion of the purge gas to the adsorber device.

A further light concentrating device is, for example, a second light concentrating device, which can be configured in the same, similar or a different way as a first light concentrating device. It is understood that the number of light concentrating devices is not limited to two, rather there may be a plurality of light concentrating devices present in the process engineering arrangement.

Each light concentrating device has a respective focal area, to which the sunlight is directed. Different focal areas of different light concentrating devices are preferably spatially separated. Then, it is possible to arrange a heating section in each of the focal areas. Further, the piping system can be configured to direct portions of the purge gas stream to each of the focal areas. When passing through the heating section, each portion of the purge gas is preferably heated to at least the regeneration temperature. The heated portions of the purge gas are then directed, by the piping system downstream of the heating device, to the adsorber device. Preferably, the portions are merged after passing the heating sections, in order to omit additional pipes and to keep the piping system simple.

The portions may be created in the piping system upstream from the heating device, or at least upstream of the heating sections in the heating device. For this, the piping system may comprise at least one diverting valve. The different portions may have the same mass flow each. However, one can contemplate of different flow rates in the branches.

An advantage of this embodiment is the increased surface area of the heating sections, because several heating sections are present. Consequently, a larger mass flow of the purge gas can be heated up quickly and efficiently.

The piping system may comprise on/off valves, which allows to select the heating sections individually, which are employed for heating a respective portion of the purge gas.

Another advantage is the potential scalability of the process engineering arrangement when branches are implemented. The embodiment simplifies to increase the power of the heating device by adding further light concentrating devices and corresponding heating sections in their focal areas in the heating device.

According to a further embodiment of the process engineering arrangement, at least one portion of the purge gas is directed to a processing unit other than the adsorber device.

The portion of the purge gas may be created upstream of the heating device, such that the portion of the purge gas is heated in a respective heating section. Alternatively or additionally, the portion of the purge gas may be guided downstream from the heating device.

According to a further embodiment of the process engineering arrangement, the solar energy device comprises a further light concentrating device for collecting and concentrating sunlight in a further focal area in the heating device, and the piping system is configured to direct the purge gas to the focal area and to the further focal area, which is arranged downstream of the focal area, and to direct the purge gas to the adsorber device.

In this embodiment, the heating pipe segments are arranged sequentially along a flow path of the purge gas. The flow path is defined by the piping system. Here, the purge gas stream can be heated in step-wise fashion, where the temperature of the purge gas is increased when passing through a heating section. The temperature step depends on the heating power of the heating section, the heat capacity of the purge gas and the mass flow of the purge gas. The heating power depends on the irradiance of the light concentrating device, the absorbance of the heating section and the efficiency of the heat transfer to the purge gas. The irradiance is the total energy that is transported in the sunlight impinging on the light collecting area of the light concentrating device.

According to a further embodiment of the process engineering arrangement, the piping system comprises a diverting valve between each two sequentially arranged focal areas, for diverting a portion of the purge gas.

This is advantageous, because it makes it possible to obtain portions of the purge gas at different temperatures, e.g. for different processing units. Then, the piping system is also configured to direct each portion to the respective processing unit. The diverting valve can be a tap.

Since the heating power of each heating section depends on the irradiance, the heating power is a function of the sun's position. For example, the irradiance is much larger at noon compared with early morning hours or late evening hours. Therefore, by selecting the number of heating sections it is possible to obtain a constant purge gas mass flow at a constant regeneration temperature. For example, in the morning all heating sections of a heating device are employed to heat the purge gas. Later, when the irradiance is higher, one heating section may be sufficient to heat the purge gas stream to the regeneration temperature. Then, the diverting valve which is arranged directly after the first heating section along the flow path can be set such that the complete purge gas stream is directed to the adsorber device.

According to a further embodiment of the process engineering arrangement, it comprises a controller device, which is configured to switch the diverting valves in dependence of the temperature of the purge gas at the diverting valve and the regeneration temperature.

This enables an automated operation of the heating device in dependence of the variables that may influence the temperature of the purge gas.

In embodiments, the controller device is implemented as an electronic processing unit that is capable of executing logical algorithms, such as a PLC, a CPU, or the like.

The diverting valves may comprise electromechanical actuators for setting the state of the valve. The actuator can be controlled by an analog or digital signal. Then, the controller device is configured to control a diverting valve by transmitting a respective control signal to the electromechanical actuator of the valve.

The irradiance is a variable that influences the heating power of the heating sections and can exhibit strong variations. The irradiance changes naturally in the course of one day due to the earth's rotation. A computer program can be used to determine the irradiance as a function of the day and time. For example, the controller device may be configured to control the diverting valves according to such program. It is also possible that the controller uses a look-up table which comprises information about the irradiance. The look-up table may be stored in a data storage section in the controller device.

The arrangement may comprise temperature sensors arranged after each heating section, configured to measure the temperature of the purge gas at that position of the flow path. The information about the temperature can be used to directly control the operation of the heating device. For example when a cloud shields a part of the sunlight from some of the light concentrating devices, the heating power of the corresponding heating sections will drop. This can result in a lower purge gas temperature after the affected heating sections. The temperature drop is then detected by the sensors. In order to compensate for this, the controller device can open an additional diverting valve, such that a portion of the purge gas is directed to a further heating section. Therefore, this embodiment advantageously enables a dynamic and situation dependent automated control of the heating device.

According to a further embodiment of the process engineering arrangement, the piping system comprises a bypass pipe, which is configured to bypass a portion of the purge gas past the heating device.

It may occur that, when the heating power of a single heating section is so large, the purge gas is heated above a predetermined maximum temperature. Then, it is preferable to heat only a portion of the purge gas in the heating section, while the residual portion is passed by the heating device and merged with the heated portion downstream of the heating device. Then, the mixed portions of the purge gas may have a temperature below the maximum temperature and appropriate for purging the adsorber.

According to a further embodiment of the process engineering arrangement, the light concentrating device comprises a tracking device, which is configured to monitor or track the position of the sun in the course of a day, such that at least 50%, preferably at least 70%, more preferably at least 80% of the irradiance of the collected sunlight is concentrated in the focal area of the light concentrating device.

The focal area of an optical element depends on the relative position of the light source and the optical element. In case of a moving light source, like the sun, it is possible to obtain a constant position of the focal area by adjusting the position and/or the rotation of the optical element accordingly.

The tracking device is configured to track the sun's position and to adjust the position and/or rotation of the light concentrating device. This has the beneficial effect that the irradiance in the focal area can be optimized such that the influence of the sun's position during a day on the heating power can be minimized.

According to a further embodiment of the process engineering arrangement, the light concentrating device is configured to be turned to a turning or inactive position, such that the sunlight is not concentrated in the focal area corresponding to the light concentrating device.

This can be advantageous when the irradiance is high enough, that only a fraction of the heating sections are needed to heat the purge gas stream to the regeneration temperature. The remaining heating section are then not needed and no portion of the purge gas is directed through them. Parts of the heating section are then inactive. However, there is still purge gas present in those sections, which does not necessarily flow. Therefore, the corresponding heating sections are not cooled by the purge gas and may reach a critical temperature. Above the critical temperature, for example the purge gas may decompose, which can lead to damage the heating section. Thus, by turning the light concentrating device such that the sunlight is not directed to the focal area, the heating section can be kept below said critical temperature and safety is increased

According to a further embodiment of the process engineering arrangement, it further comprises a thermal energy storage device, which is configured to be heated by the purge gas in a storing mode, and to heat the purge gas in a heating mode.

This has the advantage that the purge gas can be heated by the thermal energy storage device even when the sunlight is not sufficiently available, e.g. during the night.

The thermal energy storage device can comprise a tank which is filled with a molten salt as a heat storing medium.

During times of high irradiance, when the heating power is larger than the power needed for heating the purge gas to the regeneration temperature, the purge gas or a portion of the purge gas can be heated to a higher temperature than the regeneration temperature. Then, the piping system is configured to direct the heated purge gas or portion of the purge gas to the thermal energy storage device in order to heat the heat storing medium. The purge gas is cooled during this process. The devices are preferably configured such that the purge gas stream, which is directed to the adsorber device for regenerating the adsorber device retains at least the regeneration temperature.

When the thermal energy storage is sufficiently heated, it may be employed to heat the purge gas at times when the irradiance is not sufficient for heating the purge gas to at least the regeneration temperature. Then, it is possible to extend the operational time of the regeneration mode into night hours. It can also ensure operation of the temperature swing adsorption apparatus when the sun is blocked due to clouds, a sandstorm, or other temporary effects.

According to a second aspect of the invention, a method for operating a process engineering arrangement comprising a temperature swing adsorption apparatus with at least one adsorber device, a heating device, and a solar energy device is suggested. The method comprises the steps:
collecting sunlight by the solar energy device to provide energy to the heating device;
heating a purge gas in the heating device to at least a regeneration temperature; and
purging the at least one adsorber device with the purge gas at at least the regeneration temperature.

This method is particularly useful to operate a process engineering arrangement according to one of the embodiments of the first aspect.

This method makes advantageous use of a solar energy device as a source of energy for the heating device. Therefore, it is possible to save energy that may otherwise be generated by burning fossil fuels. It also helps to reduce the environmental impact of operating such a process engineering arrangement.

The step of collecting sunlight may comprise all steps that are necessary in order to generate energy with the solar energy device. For example, it may comprise placing an optical element in a position where it is irradiated by sunlight. It may further comprise aligning of the optical element in way such that the sunlight is directed to a focal area and arranging a pipe segment of a piping system in the focal area.

The step of heating the purge gas in the heating device may comprise all steps that are necessary in order to heat the purge gas to at least the regeneration temperature. For example, it may comprise directing of the purge gas in a piping system to the heating device and bringing the purge gas into contact with a hot surface such that heat is transferred into the purge gas.

The step of purging the at least one adsorber device with the purge gas may comprise all steps that are necessary to purge the adsorber device. For example, it may comprise directing the heated purge gas from the heating device to an inlet of the adsorber device and passing of the purge gas through the adsorber device, where it comes into contact with an adsorbent in the adsorber device, thus heating the adsorber device and regenerating the adsorber device.

According to an embodiment of the method for operating a process engineering arrangement, the temperature swing adsorption apparatus comprises at least two adsorber devices, which are configured to be operated alternatingly and cyclically in an adsorption mode and in a regeneration mode. In this embodiment, when one adsorber device is operated in the adsorption mode, the at least one other adsorber device is operated in the regeneration mode; and in the regeneration mode of the at least one other adsorber device, the purge gas with the regeneration temperature is configured to purge the at least one other adsorber device.

The method for operating has the advantage that the process engineering arrangement can be operated continuously. This means, that there is no off-time and the economic efficiency of the process engineering arrangement can be optimized.

According to a further embodiment of the method for operating a process engineering arrangement, the regeneration mode has a duration of at most 12 hours, preferably at most 10 hours, and more preferably at most 8 hours.

With this method, a solar energy device can be used to heat the purge gas to the regeneration temperature while it is still ensured that the adsorber device is fully regenerated after one day. When two adsorber devices are combined this enables continuous operation of the temperature swing adsorption apparatus. This method is particularly useful to operate a process engineering arrangement according to one of the embodiments of the first aspect.

According to a further embodiment of the method for operating a process engineering arrangement, the process engineering arrangement comprises a thermal energy storage device and the method comprises the steps:
heating the thermal energy storage device with the purge gas at times when the purge gas temperature is higher than the regeneration temperature, and
heating the purge gas with the thermal energy storage device at times when the purge gas temperature is below the regeneration temperature.

This method has the advantage that the process engineering arrangement may be operated independently of the current irradiance of the light concentrating devices. For example, such a process engineering arrangement can be operated during nighttime or when the weather conditions are such that the sunlight is not sufficient to heat the purge gas to the regeneration temperature.

Certain embodiments of the presented process engineering arrangement and the method for operating a process engineering arrangement may comprise individual or combined features, method steps or aspects as mentioned above or below with respect to exemplary embodiments.

In the following, embodiments of process engineering arrangements and methods and devices relating to the operation of process engineering arrangement are described with reference to the enclosed drawings.
Fig. 1 shows a schematic process flow diagram of a first embodiment of a process engineering arrangement;
Fig. 2 shows a schematic process flow diagram of a second embodiment of a process engineering arrangement;
Fig. 3a shows a side-view and Fig. 3b shows a cross-sectional view of a first embodiment of a solar thermal device;
Fig. 4 shows a cross-sectional view of a second embodiment of a solar thermal device;
Fig. 5 shows a perspective view of a third embodiment of a solar thermal device;
Fig. 6 shows a perspective view of a forth embodiment of a solar thermal device;
Fig. 7 shows a schematic process flow diagram of an embodiment for a by-pass arrangement for a heating device;
Fig. 8a and Fig. 8b each show a cross-sectional view of a fifth embodiment of a solar thermal device;
Fig. 9a shows a perspective view and Fig. 9b shows a cross-sectional view of a sixth embodiment of a solar thermal device;
Fig. 10 shows schematic process flow diagram of a third embodiment of a process engineering arrangement; and
Fig. 11 shows a flow chart for an embodiment of a method for operating a process engineering arrangement.

Like or functionally like elements in the drawings have been allotted the same reference characters, if not otherwise indicated.

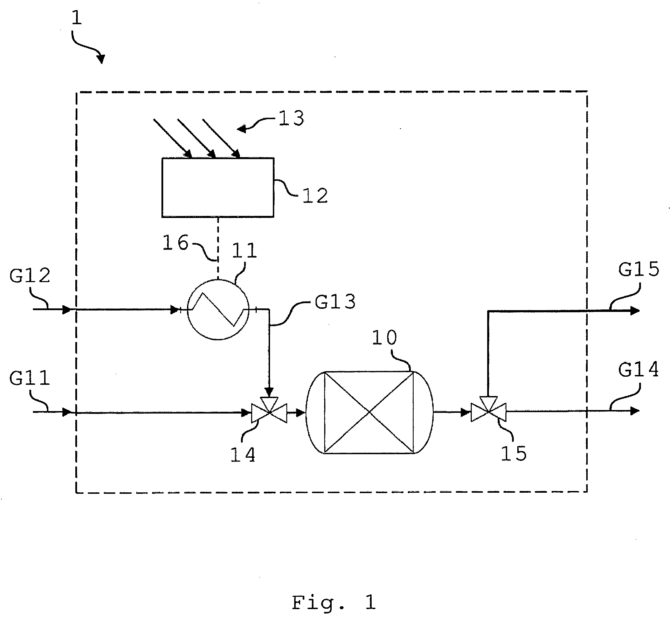

Fig. 1 shows a schematic process flow diagram of a first embodiment of a process engineering arrangement 1, which is implemented as a temperature swing adsorption apparatus 1 in a hydrogen purification plant (not shown). The temperature swing adsorption apparatus 1 of this comprises an electric heating device 11, which is operated by electrical energy obtained from a solar energy device 12, which is configured to collect sunlight 13 and transform the light energy into electrical energy. The electrical energy is provided to the electrical heating device 11 through a power line 16. Further, the apparatus 1 comprises an adsorber device 10. The temperature swing adsorption apparatus 1 is operable in a cleaning mode and in a regeneration mode. In the cleaning mode, the adsorber device 10 adsorbs impurities from a process gas G11. In the regeneration mode, the adsorber device 10 releases the adsorbed impurities to a purge gas G12. The temperature swing adsorption apparatus 1 comprises a piping system, which is constructed from pipes and diverting valves 14, 15 and is configured to direct the process gas G11, G14 and the purge gas G12, G13, G15 to the devices as demanded. Reference characters G11, G12, G13, G14 and G15 refer to the respective gas streams that are guided or conducted by appropriate pipe sections or conduits implementing the piping system.

In the cleaning mode of the temperature swing adsorption device 1, the process gas G11, which is provided by a pressure swing adsorption apparatus (not shown), is directed to the adsorber device 10 through a diverting valve 14, while the purge gas G13 is blocked by the diverting valve 14. The process gas G11 comprises, for example, at least 95.5% hydrogen, and the remainder contains impurities like nitrogen, oxygen, methane and/or other fluids or particles. The process gas G11 has a temperature of 80 K when it is directed to the adsorber device 10. The adsorber device 10 is filled with an adsorbent material like activated carbon. The process gas G11 runs through the activated carbon of the adsorber device 10 in the cleaning mode. In the cleaning mode, the adsorber device 10 has the same or similar temperature of 80 K as the process gas G11. When the process gas G11 is in contact with the adsorbent at this temperature, some of the impurity molecules adsorb to the adsorbent and are thus removed from the process gas G11. After passing through the adsorber device 10, the product gas G14 is obtained, which has a higher purity than the process gas G11. This can lead to a hydrogen content in the product gas G14 which is higher than 95.5%. The product gas G14 is then directed to a container device (not shown) via the diverting valve 15 and can be stored elsewhere.

During operation in the cleaning mode, the adsorbent saturates with the impurities, and the adsorber device 10 reaches its maximum adsorption capacity, which depends on the amount of adsorbent in the adsorber device 10. When the maximum is reached, the product gas G14 will have a lower purity than desired and necessary for operating the downstream hydrogen purification plant. Therefore, it is necessary to regenerate the adsorber device 10, by operating the temperature swing adsorption apparatus 1 in the regeneration mode. In the regeneration mode, the electrical heating device 11 is activated and operated with electrical energy supplied from the solar energy device 12. The heating device 11 heats the purge gas G12 to the regeneration temperature. For example, the regeneration temperature is 600 K. The heated purge gas G13 is then directed through the diverting valve 14 to the adsorber device 10. In the regeneration mode, the process gas G11 is blocked by the diverting valve 14. The heated purge gas G13 flows through the adsorber device 10, thus heating the adsorber device 10 to the regeneration temperature and simultaneously taking up the adsorbates, which desorb from the adsorbent when it is heated up. After passing the adsorber device 10, a loaded purge gas G15 is obtained. For example, the loaded purge gas G15 is directed via the diverting valve 15 to a separator device (not shown). During regeneration, no product gas G14 is obtained.

After the regeneration mode, the adsorber device 10 is fully regenerated and can be used again for cleaning the process gas G11 to obtain the product gas G14. For this, the adsorber device 10 is cooled down to the operational temperature of 80 K in the cleaning mode. This can be done by directing the process gas G11 having a temperature of 80 K to the adsorber device 10 and directing the output of the adsorber device 10 back to the upstream process (not shown), until the adsorber device 10 has reached its operational temperature.

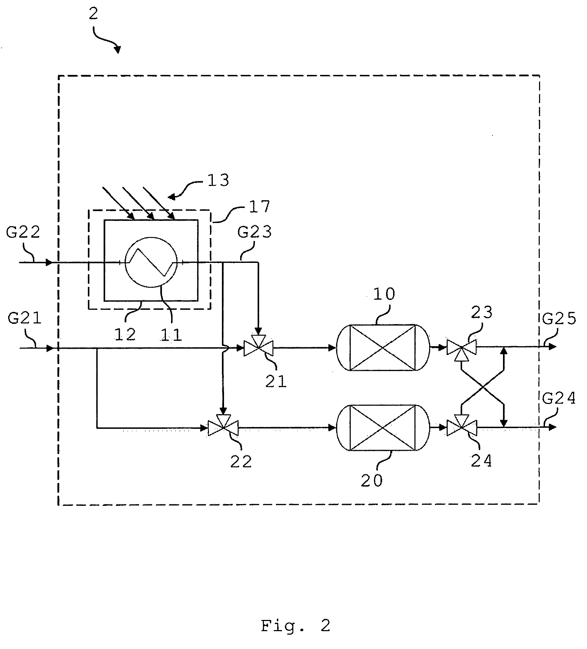

Fig. 2 shows a schematic process flow diagram for a second embodiment of a process engineering arrangement 2, which is implemented as a temperature swing adsorption apparatus 2 for a hydrogen plant (not shown). The temperature swing adsorption apparatus 2 in this example comprises two adsorber devices 10, 20, a diverting valve 21, 22 upstream from each of the adsorber devices 10, 20 and a diverting valve 23, 24 downstream from each of the adsorber devices 10, 20. Further, the heating device 11 and the solar energy device 12 are implemented as a solar thermal device 17.

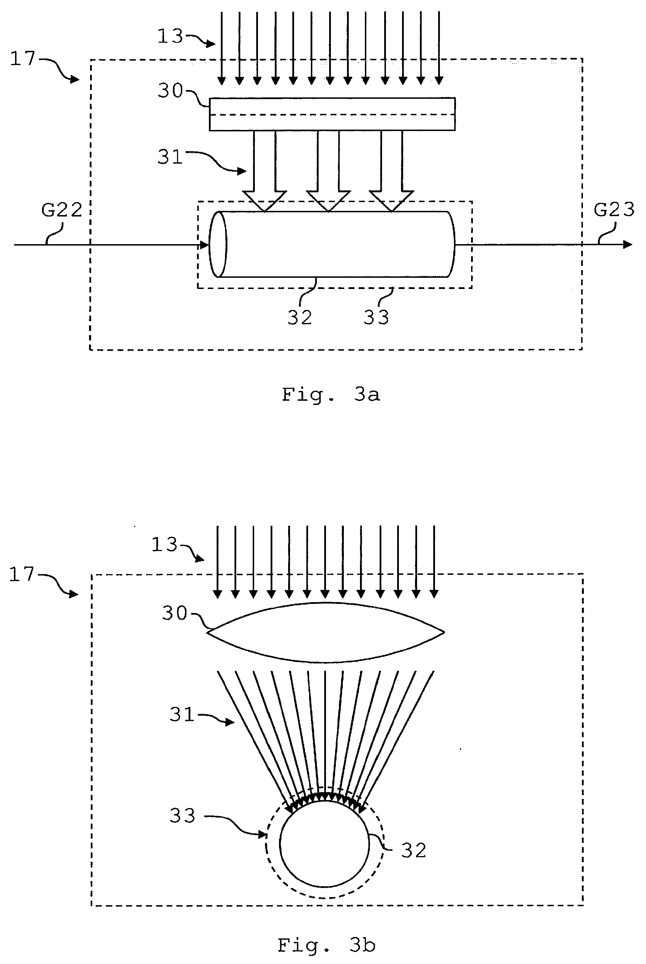

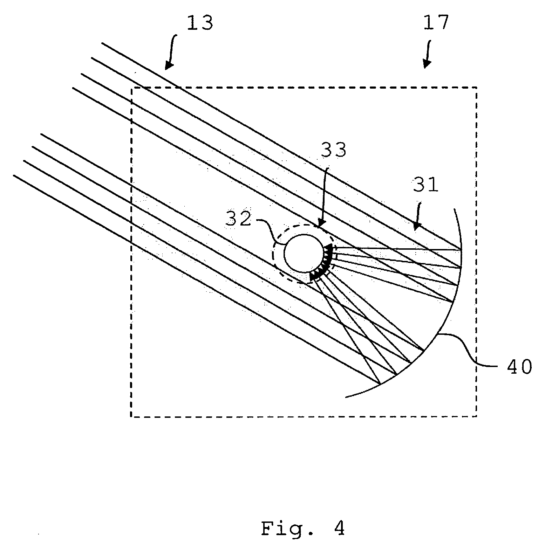

The solar thermal device 17 is configured to directly heat the purge gas G22 to the regeneration temperature by converting the sunlight's 13 energy into thermal energy, which is then transferred into the purge gas G22. This can be done by focusing the sunlight 13 on an absorber in the form of a pipe (see for embodiments shown in Fig.3a, 3b, 4 below), through which the purge gas G22 is directed.

By using two adsorber devices 10, 20 the temperature swing adsorption apparatus 2 has the advantage that it can be operated continuously. At all times, one of the adsorber devices 10, 20 is operated in the cleaning mode, while the other one is operated in the regeneration mode. There can be an intermittent overlap of the cleaning modes, to ensure that always at least one adsorber device 10, 20 is actually cleaning the process gas G21.

For example, adsorber device 10 is operated in the cleaning mode. Then the diverting valve 21 directs the process gas G21 to the adsorber device 10 and blocks the heated purge gas G23. The diverting valve 23 may route the product gas G24 to a trailer (not shown). The process gas G21 in this example has a composition of 35% hydrogen, 63% carbon monoxide, 0.5% nitrogen and 1 % methane, e.g. by mass or weight-percent, and some other compounds that are considered impurities like noble gases, water, oxygen, and the like.

After that, the adsorber device 20 is operated in the regeneration mode. Thus, the purge gas G22 is directed through the solar thermal device 17, where it is heated to the regeneration temperature of 800 K. The purge gas G22 has a composition of 87% hydrogen, 12% carbon monoxide, e.g. by mass or weight-percent, and minor fractions of other gases. The heated purge gas G23 is directed through the diverting valve 22 to the adsorber device 20, to heat and regenerate the adsorber device 20. The diverting valve 22 blocks the process gas G21. The purge gas G23 takes up the adsorbed components from the adsorber device 20. The loaded purge gas G25 is directed via the diverting valve 24 to a generator to be burned (not shown). The solar thermal device 17 is operable to heat the purge gas G22 when the irradiance on the light collecting device is high enough. Especially during the night this condition is generally not fulfilled.

For example, to ensure a continuous production of the product gas G24, each adsorber device 10, 20 has an adsorption capacity sufficient to clean the process gas G24 for a time period of 24h. A regeneration time window for regenerating the adsorber devices 10, 20 is restricted to the daytime when sufficient sunlight impinges on the solar thermal device 17. The respective regeneration time window depends on the position of the plant on the earth. For example, close the equator, a sufficiently strong irradiance for 8h every day throughout a year can be expected.

Fig. 3a shows a side-view and Fig. 3b shows a cross-sectional view of an embodiment of a solar thermal device 17. For example, the embodiment can be employed in the process engineering arrangement 2 of Fig. 2. The solar thermal device 17 comprises a light concentrating device 30, which is implemented as a convex lens 30 having a rod shape. The lens 30 is configured to focus sunlight 13 to a focal area 33. The converging sunlight 31 impinges on a heating section 32, which is arranged in the focal area 33 of the lens 30. The heating section 32 can be formed by a stainless steel pipe, which is coated with a high absorbing paint and a protective coating (not shown). The purge gas G22 is directed through the heating section 32, thus thermal energy is transferred from the stainless steel pipe to the purge gas G22. After passing through the heating section 32, the heated purge gas G23 with at least the regeneration temperature is obtained.

Fig. 4 shows a cross-sectional view of a further example of a solar thermal device 17. In this embodiment, the solar thermal device comprises a light concentrating device 40 implemented as a parabolic reflector 40. The sunlight 13 impinges on the parabolic reflector 40 and is reflected and directed to a focal area 33 of the parabolic reflector 40. The converging light 31 impinges on a heating section 32, which can be implemented in a similar manner as the heated pipe segment of Fig. 3a and 3b. The purge gas G22 (running perpendicular to the paper plane) is passed through the heating section 32 and thus is heated to at least the regeneration temperature.

Employing parabolic reflectors has the advantage that almost any material can be used to form the body of such a reflector. A coating (not shown) on the surface of the reflector can then be used to impart reflective properties to the device.

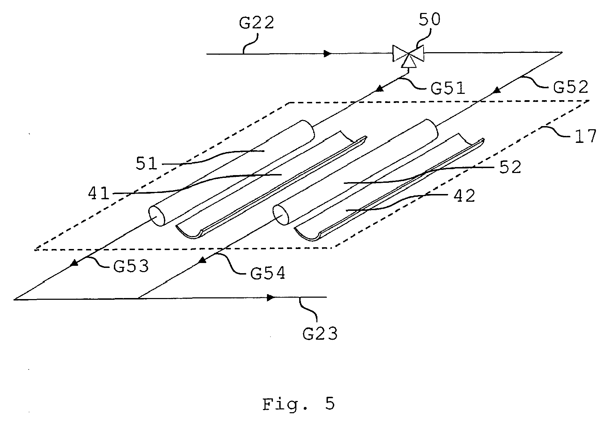

Fig. 5 shows a perspective view of a third embodiment of a solar thermal device 17. In the embodiment of Fig. 5, there are two heating sections 51, 52 provided, which are arranged in a parallel manner by the piping system. The gas flow through each of the heating sections 51, 52 can be controlled by the diverging valve 50. Further, each heating section 51, 52 has an associated light concentrating device which is implemented as a parabolic trough 41, 42 in this embodiment.

For example, in the early morning hours the irradiance is not very strong and thus a large light collecting area is required to have a sufficient heating power to heat the purge gas G22 to at least the regeneration temperature. Then, the purge gas G22 is diverted into two portions G51 and G52 by the diverting valve 50. The two portions G51 and G52 not necessarily have the same mass flow each. After passing through the respective heating section 51, 52, the two heated portions G53, G54 are merged and form the heated purge gas G23. The temperature of the heated portions G53, G54 does not need to be the same. Later, in the course of the day, when the irradiance is high, the light collecting area can be smaller than in the morning to produce sufficient heating energy. Then, the diverting valve 50 can be set to direct the full mass flow of the purge gas G22 through either one of the heating sections 51, 52. For example, the full mass flow is directed to the heating section 51. The mass flow of the portion G51 is equal to the mass flow of the purge gas G22, while the mass flow of the portion G52 is zero. The heated purge gas G23 is then directed to an adsorber device 10, 20 (not shown), for example the adsorber device 10, 20 of the example of Fig. 2.

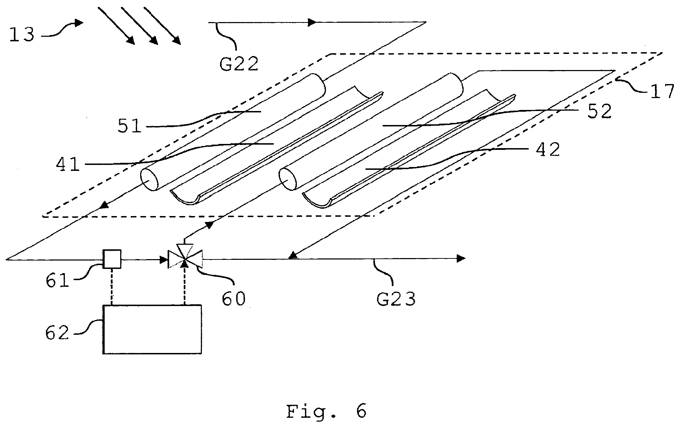

Fig. 6 shows a perspective view of a forth embodiment of a solar thermal device 17. The forth embodiment is similar to the one of Fig. 5 wherein the heating sections 51, 52 are connected in a sequential manner and a temperature sensor 61 as well as a control unit 62 are provided. In this example, the full mass flow of the purge gas G22 passes through the heating section 51, which is heated by the sunlight 13 and is collected by the parabolic trough 41. Depending on the temperature of the purge gas G22 after passing through the first heating section 51, which is measured by the temperature sensor 61, the control unit 62 sets the diverting valve 60. For example, when the temperature measured by the temperature sensor 61 is at least the regeneration temperature, the control unit 62 switches the diverting valve 60 such that the purge gas G22 is directed to the respective adsorber device 10 (see Fig. 1). When the purge gas temperature is below the regeneration temperature, the control unit 62 can set the diverting valve 60 such that at least a portion or the full mass flow passes through the second heating section 52. The heated purge gas G23 is then directed to an adsorber device, for example the adsorber device 10 of the example of Fig. 1.

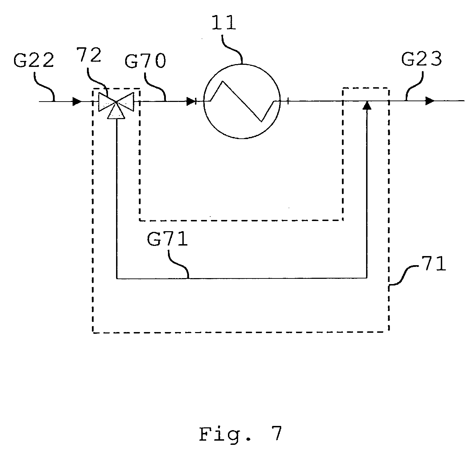

Fig. 7 shows a schematic process flow diagram of an embodiment of a bypass arrangement or a bypass pipe section 71. The purge gas G22 can be diverted into two portions G70 and G71 by the diverting valve 72, which is arranged upstream from the heating device 11. One portion G70 is directed to the heating device 11 to be heated to at least the regeneration temperature. The other portion G71 is directed via the bypass pipe section 71 to a position downstream from the heating device 11. The two portions G70 and G71 are merged again to form the heated purge gas G23. The heated purge gas G23 is then directed to an adsorber device 10, 20, for example the adsorber device 10, 20 of the example of Fig. 2.

Embodiments including bypass arrangements are useful when the mass flow that can be directed through the heating device 11, is limited. Then, the full mass flow of the purge gas G22 is diverted into two mass flows corresponding to the portion G70 through the heating device 11 and the portion G71 bypassing the heating device 11. The two portions G70, G71 are merged are merged to form the heated purge gas G23 at the full mass flow.

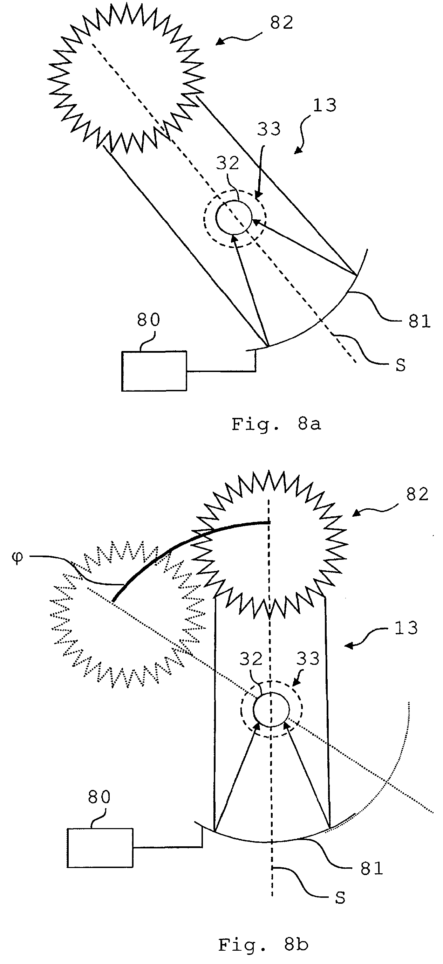

Fig. 8a and Fig. 8b each show a cross-sectional view of a fifth embodiment of a solar thermal device 17. The solar thermal device 17 is provided with a tracking device 80, which is configured to track the sun's 82 position and to actuate the guided parabolic trough 81, which is the light concentrating device, such that the sunlight 13 is directed to the focal area 33 throughout a day. For this, the guided parabolic trough 81 is placed on a mount, which allows to change its position.

Fig. 8a shows the arrangement of solar thermal device 17 at a first time of the day, when the sun 82 is rising. The dashed line shows a symmetry axis S of the arrangement. Fig. 8b shows the arrangement at noon, when the sun 82 is in the zenith of the sky. In Fig. 8b, there is shown the position of the sun 82, the guided parabolic trough 81 and the symmetry axis S of Fig. 8a in dotted lines. The angle ϕ denotes the angle the sun 82 has travelled between the two positions shown in figures 8a and 8b. The angle ϕ corresponds to the angle that the symmetry axis S has moved. The tracking device 80 actuates the guided parabolic trough 81 in such that the sunlight 13 is still focused towards the heating section 32.

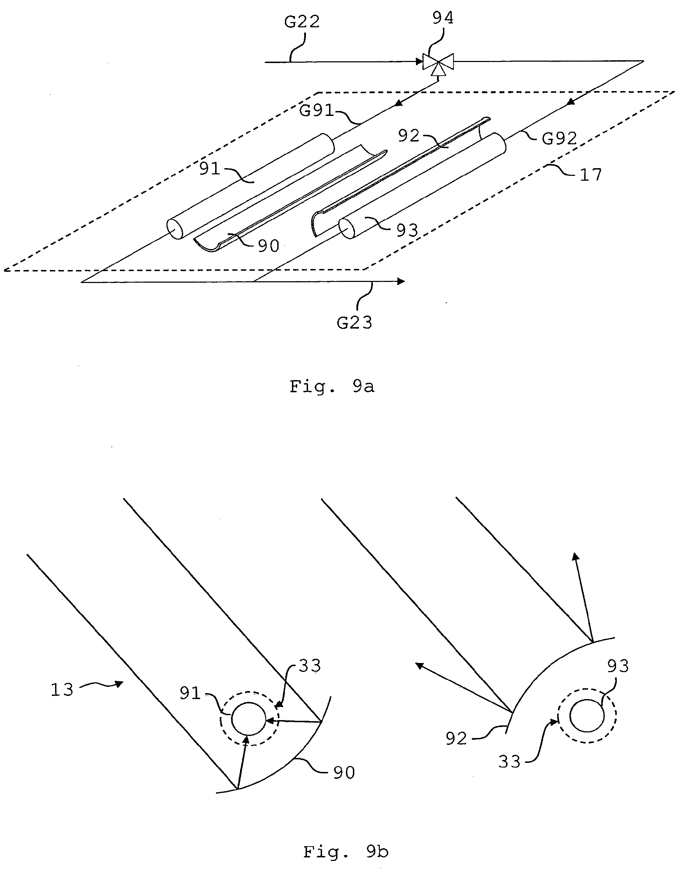

This embodiment is particularly helpful to optimize the efficiency of the solar thermal device 17 and can be combined, e.g. with the embodiments shown in Figs. 4, 5 and 6. Fig. 9a shows a perspective view and Fig. 9b shows a cross-sectional view of a sixth embodiment of a solar thermal device 17. The sixth embodiment is similar to the embodiment shown in Fig. 5, wherein the parabolic trough 92 can be turned to a turning position such that the sunlight 13 is deflected away from the corresponding heating section 93, as is shown in the cross-sectional view of the embodiment in Fig. 9b.

When the irradiance is very high, such that a single heating section 91 is sufficient to heat the purge gas G22 to the regeneration temperature and the diverting valve 94 is set in such way that the mass flow of the portion G92 of the purge gas G22 is zero, the heating section 93 is shielded from the sunlight 13. Therefore, the heating section 93 is inactive. Even when the portion G92 has no mass flow, an amount of the purge gas G22 stays in the heating section 93. If the heating section 93 is permanently heated by concentrating the sunlight 13 on it, its temperature may rise above a critical temperature, at which the residual amount of the purge gas in the heating section can decompose. This can lead to chemical substances that may harm parts of the heating section 93 or the piping system. This is avoided by shielding the heating section 93 from the sunlight 13. It is not necessary that the sunlight 13 is completely shielded from the heating section 93, as it is shown. It can be sufficient to turn the parabolic trough 92 to a position such that the sunlight 13, which impinges on its surface, is not fully focused to the heating section 93.

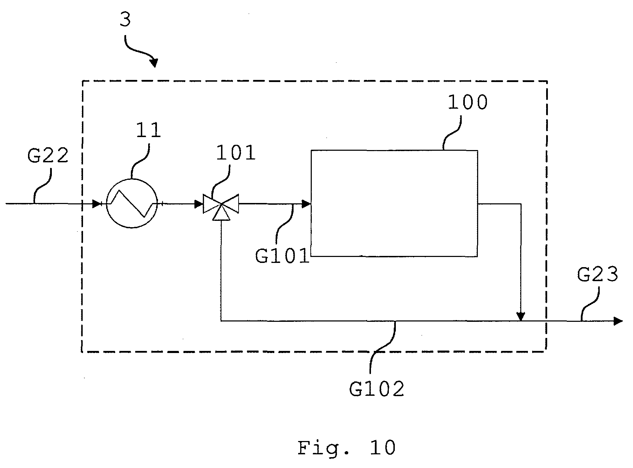

Fig. 10 shows a schematic process flow diagram of a third embodiment of a process engineering arrangement 3. In this embodiment 3, a thermal energy storage device 100 is provided. The thermal energy storage device 100 is filled with molten salt, which has a high thermal capacity. The diverting valve 101 is arranged upstream from the thermal energy storage device 100 and is configured to direct a portion G101 of the purge gas G22, which has already passed the heating device 11, to the thermal energy storage device 100. A purge gas portion G102 is bypassed past the thermal energy storage device 100. The two portions G101 and G102 are merged downstream from the thermal energy storage device 100 to form the heated purge gas G23 with at least the regeneration temperature.

In this embodiment, excess heat from the heating device 11 can be stored in the thermal energy storage device 100. For example, when the heating power of the heating device 11 is sufficient to heat the purge gas G22 above the regeneration temperature, the purge gas G22 can be directed to the thermal energy storage device 100, where thermal energy is transferred to the molten salt. The molten salt is heated while the purge gas G22 is cooled down. Depending on the relation between the temperature of the purge gas G22 at the diverting valve 101, the temperature of the molten salt in the thermal energy storage device 100 and the regeneration temperature, the diverting valve 101 diverts a portion G101 of the purge gas to the thermal energy storage device 100 in such way, that the heated purge gas G23 still remains at at least the regeneration temperature.

Advantageously, once the molten salt in the thermal energy storage device 100 has obtained a sufficiently high temperature, the thermal energy storage device 100 can be used to heat the portion G101 of the purge gas G22. This is especially useful, when the heating power of the heating device 11 is not sufficient to heat the purge gas G22 to at least the regeneration temperature. For example, the storage device 100 can provide heat to the purge gas even when no sunlight is available.

The thermal energy storage device 100 may be implemented in combination with any other embodiment described herein.

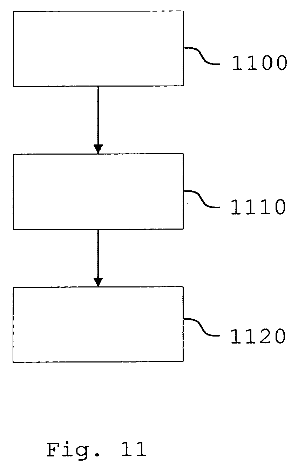

Fig. 11 is flow chart of a method for operating a process engineering arrangement, for example the process engineering arrangement 1 of Fig. 1, 2 of Fig. 2 and/or 3 of Fig. 10. Reference characters refer to the elements explained with reference to the preceding embodiments and Figs.

One step of the method includes collecting 1100 sunlight 13 by use of a light concentrating device. The collected sunlight 13 is then directed and converges to a focal area 33 (see Figs. 3, 4 or 8). In the focal area 33, an absorber device absorbs the converged sunlight 31 and is heats up. The maximum temperature the absorber can reach depends of the irradiance of the light concentrating device and the efficiency of the absorber. The higher the temperature of the absorber during exposure with sunlight is, the lower is the efficiency of the absorber. This is because the absorber itself acts as a black body, emitting infrared light.

The next step is heating 1110 the purge gas G22 by bringing it into contact with a heated surface, that is heated by the absorber. For example, the absorber is designed as a pipe, then the purge gas G22 is directed through the pipe. The absorber is heated at its outer surface and conducts the heat to its inner surface. The purge gas G22 is in contact with the inner surface, thus taking up thermal energy and increasing its temperature to at least the regeneration temperature.

Then, the heated purge gas G23 is directed to the adsorber device 10, 20 that is scheduled to be regenerated. By purging 1120 the adsorber device 10, 20, the adsorbent in the adsorber device 10, 20 is heated to or above the regeneration temperature. Adsorbates desorb from the surface of the adsorbent and are carried away with the purge gas G24. Depending on the amount of adsorbent and the amount of adsorbates, the heated purge gas G23 can purge 1120 the adsorber device 10, 20 for several hours, until it is fully regenerated.

In the disclosed embodiments of process engineering plants and arrangement, and methods for operating such solar energy is used to heat a purge gas for regenerating an adsorption means. Solar energy in terms of sunlight can be used to directly heat a purge gas. However one can contemplate of alternative configurations, e.g. where an intermediate energy form is employed, an energy storage means is used or plant equipment other than adsorber devices are purged with a hot fluid.

### List of reference numerals:

- 1: process engineering arrangement
- 2: process engineering arrangement
- 3: process engineering arrangement
- 10: adsorber device
- 11: heating device
- 12: solar energy device
- 13: light (sunlight)
- 14: diverting valve (upstream of the adsorber device)
- 15: diverting valve (downstream of the adsorber device)
- 16: power line
- 17: solar thermal device
- 20: adsorber device
- 21: diverting valve (upstream of the adsorber device 10)
- 22: diverting valve (upstream of the adsorber device 20)
- 23: diverting valve (downstream of the adsorber device 10)
- 24: diverting valve (downstream of the adsorber device 20)
- 30: light concentrating device (lens)
- 31: converging sunlight
- 32: heating pipe segment
- 33: focal area
- 40: light concentrating device (reflector)
- 41: parabolic trough
- 42: parabolic trough
- 50: diverting valve (upstream of the solar thermal device)
- 51: heating section
- 52: heating section
- 60: diverting valve (in the solar thermal device)
- 61: temperature sensor
- 62: control unit
- 70: bypass pipe
- 71: diverting valve (upstream of the heating device)
- 80: tracking device
- 81: guided parabolic trough
- 82: sun
- 90: parabolic trough
- 91: heating section
- 92: parabolic trough (turned away)
- 93: heating section (shielded)
- 94: diverting valve (upstream of the heating device)
- 100: thermal energy storage device
- 101: diverting valve (upstream of the thermal energy storage device)
- 1100: process step
- 1110: process step
- 1120: process step

- G11: process gas
- G12: purge gas (cold)
- G13: heated purge gas
- G14: product gas
- G15: loaded purge gas
- G21: process gas
- G22: purge gas (cold)
- G23: heated purge gas
- G24: product gas
- G25: loaded purge gas
- G51: portion of the purge gas
- G52: portion of the purge gas
- G53: heated portion of the purge gas
- G54: heated portion of the purge gas
- G70: portion of the purge gas (heated)
- G71: portion of the purge gas (bypassed)
- G91: portion of the purge gas (heated)
- G92: portion of the purge gas (not heated)
- G101: portion of the purge gas
- G102: portion of the purge gas
- S: symmetry axis

- ϕ: angle

## Claims

1. Process engineering arrangement comprising:
a temperature swing adsorption apparatus (1) with at least one adsorber device (10), which is configured to adsorb at least one component of a process gas (G11), in an adsorption mode, and to release the at least one adsorbed component into a purge gas (G12) at a regeneration temperature, in a regeneration mode;
a heating device (11), configured to heat the purge gas (G12) to at least the regeneration temperature; and
a solar energy device (12) being configured to feed energy to the heating device (11) for operating the heating device (11).

2. The process engineering arrangement of claim 1, wherein the solar energy device (12) is configured to collect and direct sunlight (13) to the heating device (11) for directly heating the purge gas (G12).

3. The process engineering arrangement of one of claims 1 or 2, wherein
the solar energy device (12) comprises a light concentrating device (30, 40, 41, 42, 81, 90, 93) for directing sunlight (13) to a focal area (33) in the heating device (11),
a piping system for directing the purge gas (G12, G22) to the focal area (33), where the purge gas (G12, G22) is heated to at least the regeneration temperature, and to direct the purge gas at the regeneration temperature (G13, G23) from the focal area (33) to the adsorber device (10, 20).

4. The process engineering arrangement of claim 3, wherein
the light concentrating device (30, 40, 41, 42, 81, 90, 93) comprises reflective parabolic troughs, reflective or refractive Fresnel optical elements, or a combination thereof.

5. The process engineering arrangement of any one of claims 3 or 4, wherein
the solar energy device (12) comprises a further light concentrating device (30, 40, 41, 42, 81, 90, 93) for directing sunlight (13) to a further focal area (33) in the heating device (11), and
the piping system is configured to direct a portion of the purge gas (G51, G52) to the further focal area (33) and to direct the portion of the purge gas (G53, G54) to the adsorber device (10, 20).

6. The process engineering arrangement of any one of claims 3 or 4, wherein
the solar energy device (12) comprises a further light concentrating device (30, 40, 41, 42, 81, 90, 93) for directing sunlight (13) to a further focal area (33) in the heating device (11), and
the piping system is configured to direct the purge gas (G12, G22) to the focal area (33) and to the further focal area (33), which is arranged downstream of the focal area (33), and to direct the purge gas (G13, G23) to the adsorber device.

7. The process engineering arrangement of claim 6, wherein the piping system comprises a diverting valve (60) between each two sequentially arranged focal areas (33), for diverting a portion of the purge gas (G12, G22).

8. The process engineering arrangement of claim 7, further comprising a control unit (62), which is configured to switch the diverting valves (60) in dependence of the temperature of the purge gas (G12, G22) at the diverting valve (60) and the regeneration temperature.

9. The process engineering arrangement of any one of claims 3 to 8, wherein the piping system comprises a bypass pipe (71), which is configured to bypass a portion (G71) of the purge gas (G12, G22) by the heating device (11).

10. The process engineering arrangement of any one of claims 3 to 9, wherein the light concentrating device (30, 40, 41, 42, 81, 90, 93) comprises a tracking device (80), which is configured to track the position of the sun (82) in the course of a day, such that at least 50%, preferably at least 70%, more preferably at least 80% of the sunlight (13) is directed to the focal area (33) of the light concentrating device (30, 40, 41, 42, 81, 90, 93).

11. The process engineering arrangement of any one of claims 3 to 10, wherein the light concentrating device (30, 40, 41, 42, 81, 90, 93) is configured to be turned to a turning position, such that the sunlight (13) is not directed to the focal area (33) corresponding to the light concentrating device (13).

12. The process engineering arrangement according to any one of claims 1 to 10, further comprising a thermal energy storage device (100), configured to be heated by the purge gas (G12, G22) in a storing mode, and to heat the purge gas (G12, G22) in a heating mode.

13. Method for operating a process engineering arrangement comprising a temperature swing adsorption apparatus (1, 2) with at least one adsorber device (10, 20), a heating device (11), and a solar energy device (12), comprising:
Collecting (1100) sunlight (13) by the solar energy device (12) to provide energy to the heating device (11);
Heating (1110) a purge gas (G12, G22) in the heating device (11) to at least a regeneration temperature; and
Purging (1120) the at least one adsorber device (10, 20) with the purge gas (G13, G23) at the regeneration temperature.

14. Method for operating a process engineering arrangement according to claim 13, wherein the temperature swing adsorption apparatus (1, 2) comprises at least two adsorber devices (10, 20), which are configured to be operated alternatingly and cyclically in an adsorption mode and in a regeneration mode, wherein
when one adsorber device (10, 20) is operated in the adsorption mode, the at least one other adsorber device (10, 20) is operated in the regeneration mode; and
in the regeneration mode of the at least one other adsorber device (10, 20), the purge gas at the regeneration temperature (G13, G23) is configured to purge the at least one other adsorber device (10, 20).

15. Method for operating a process engineering arrangement according to claim 14, wherein the regeneration mode has a duration of at most 12 hours, preferably at most 10 hours, and more preferably at most 8 hours.
